# EUROPÄISCHE PATENTANMELDUNG

(11) **EP 4 696 453 A1**
(43) Veröffentlichungstag der Anmeldung: **18.02.2026**
(21) Anmeldenummer: 25194194.4
(22) Anmeldetag: 05.08.2025
(51) Int. Cl.: B23Q 1/01, B23Q 3/155, B23Q 3/157, B23Q 39/02, B23Q 39/04, G01B 5/00

(54) **PORTALWERKZEUGMASCHINE MIT WENIGSTENS EINEM MITFAHRENDEN MAGAZIN FÜR WERKZEUGE**

(30) Priorität: 16.08.2024 DE 102024123449
(71) Anmelder: Weinmann Holzbausystemtechnik GmbH, 72813 St. Johann (DE)
(72) Erfinder: van Aken, Benjamin, 72770 Reutlingen (DE); Goller, Michael, 72525 Münsingen (DE)
(74) Vertreter: Dürr - Corporate IP

(57) **Zusammenfassung**

Die Erfindung betrifft eine Werkzeugmaschine, insbesondere zur Holzbearbeitung. Ein Portal ist über einer Werkstückauflage verfahrbar. Gemeinsam mit dem Portal bewegt sich wenigstens ein Magazin für Werkzeuge. Vorteilhaft sind mehrere mitbewegte Magazine für unterschiedliche Arten von Werkzeugen vorgesehen. Die Werkzeuge können je nach ihrem Typ in Haltern aufgenommen sein. Die Halter weisen vorzugsweise jeweils einen gleichartigen Koppelabschnitt auf. An einem Querträger des Portals ist wenigstens eine Aufnahmeeinrichtung vorgesehen und quer zur Verfahrrichtung des Portals bewegbar. Vorzugsweise ist beidseits wenigstens eine Aufnahmeeinrichtung bewegbar am Querträger angeordnet. Je ein (ggf. in einem Halter aufgenommenes) Werkzeug kann an eine Aufnahmeeinrichtung angekoppelt werden, um auf der Werkstückauflage angeordnete Werkstücke zu bearbeiten und/oder zu prüfen. Speicherplätze des Magazins bzw. der Magazine können relativ zum Portal bewegbar sein. Dadurch kann die Übergabe der Werkzeuge zwischen dem (jeweiligen) Magazin und der Aufnahmeeinrichtung erleichtert und das Magazin besonders platzsparend angeordnet werden. Gleichwohl bewegt sich das Magazin bzw. bewegen sich die Magazine insgesamt mit dem Portal mit, sodass für einen Wechselvorgang lediglich die Aufnahmeeinrichtung und ggf. das Magazin bewegt werden müssen.

## Beschreibung

### Hintergrund der Erfindung

Die Erfindung betrifft eine Werkzeugmaschine aufweisend
- eine Werkstückauflage;
- ein über der Werkstückauflage in einer x-Richtung verfahrbares Portal mit einem Querträger;
- wenigstens eine entlang des Querträgers in einer y-Richtung bewegbare Aufnahmeeinrichtung für ein Werkzeug; und
- ein Magazin mit mehreren Speicherplätzen für Werkzeuge. Die Erfindung betrifft ferner ein Verfahren zum Betreiben einer Portalwerkzeugmaschine.

Eine solche Werkzeugmaschine ist aus der Offenlegungsschrift DE 10 2019 130 059 A1 bekannt.

Werkzeugmaschinen dieser Art werden insbesondere zur Holzbearbeitung, beispielsweise zur Herstellung oder Bearbeitung von Bauteilen für Fertighäuser eingesetzt. Das Portal dient einerseits zum Bewegen von Zerspanungswerkzeugen relativ zu einem an der Werkstückauflage angeordneten Werkstück. Andererseits können mit dem Portal Befestigungsaggregate, d. h. Werkzeuge zum Befestigen zweier Werkstückteile aneinander, über der Werkstückauflage bewegt werden. Es ist beispielsweise möglich, einen Holzrahmen herzustellen und plattenförmige Elemente wie Gipskarton- oder Holzplatten auf dem Rahmen zu befestigen. Als Befestigungsmittel können z. B. Nägel oder Klammern eingesetzt werden, die über das am Portal gehaltene Befestigungsaggregat in die Werkstückteile eingebracht werden.

Gemäß der eingangs erwähnten DE 10 2019 130 059 A1 kann an dem Portal ein Werkzeugwechsler vorgesehen sein, mit dem verschiedene Werkzeuge wie Sägen, Fräser oder Bohrer mit dem Portal verbindbar sind.

Häufig werden verschiedene Befestigungsmittel und entsprechend verschiedene Befestigungsaggregate benötigt. Da unterschiedliche Befestigungsaggregate jeweils unterschiedliche Schnittstellen aufweisen, können die Befestigungsaggregate nicht ohne weiteres automatisch ein- oder ausgewechselt werden, wie es für Zerspanungswerkzeuge grundsätzlich bekannt ist.

Die eingangs erwähnte DE 10 2019 130 059 A1 schlägt daher vor, ein Magazin für verschiedene Befestigungsaggregate ortsfest in Reichweite des Portals anzuordnen. Das Portal holt sich im Betrieb automatisch jeweils nur dasjenige Befestigungsaggregat, das für den jeweiligen Montageschritt notwendig ist. Dadurch soll die zu bewegende Masse des Portals reduziert werden, um eine große Arbeitsgeschwindigkeit des Portals zu ermöglichen. Daher wird in DE 10 2019 130 059 A1 eine permanente Anordnung von Befestigungsaggregaten am Portal abgelehnt. Die feststehende Anordnung des Magazins erfordert, dass sich das Portal für jeden Wechsel der Befestigungsaggregate zu dem Magazin bewegt. Dies ist mit relativ langen Verfahrwegen verbunden und bedingt einen entsprechend großen Zeitaufwand für einen Wechselvorgang, da ein ortsfestes Magazin sich außerhalb des Bereichs der Werkstückauflage befinden muss. Insbesondere wenn das Portal über mehreren Werkstückauflagen eines Fertigungsabschnitts bewegt werden kann, ist dies nachteilig, da sich regemäßig zwischen den mehreren Werkstückauflagen aus sicherheitstechnischen Gründen keine fest verbauten Gegenstände befinden dürfen. Zudem müssen stationäre Magazine oft je nach Kundenanforderungen angepasst werden, was zu einem erhöhten Kostenaufwand führt. Beispielsweise benötigen Handwerksbetriebe andere feststehende Magazine als Industriebetriebe.

### Aufgabe der Erfindung

Es ist eine Aufgabe der Erfindung, eine rationelle Fertigung mit einer Portalwerkzeugmaschine zu ermöglichen.

### Beschreibung der Erfindung

Diese Aufgabe wird erfindungsgemäß gelöst durch eine Werkzeugmaschine gemäß Anspruch 1 und ein Verfahren gemäß Anspruch 19. In den Unteransprüchen und der Beschreibung sind vorteilhafte Ausführungsformen bzw. Varianten angegeben.

### Erfindungsgemäße Werkzeugmaschine

Die erfindungsgemäße Werkzeugmaschine weist wenigstens eine Werkstückauflage auf. An der Werkstückauflage kann ein zu bearbeitendes Werkstück angeordnet werden. Die Werkstückauflage kann als ein Werkstücktisch ausgebildet sein. Die Werkstücke können insbesondere Holzrahmenelemente mit einem Mindestmaß von 2 m, bevorzugt 4 m, weiter bevorzugt 6 m in einer Längsrichtung (im Folgenden der x-Richtung eines vorzugsweise kartesischen Koordinatensystems gleichgesetzt) und 2 m in einer Querrichtung (im Folgenden der y-Richtung des vorzugsweise kartesischen Koordinatensystems gleichgesetzt) sein.

Über der Werkstückauflage ist ein Portal der Werkzeugmaschine in der x-Richtung verfahrbar. Mehrere Werkstückauflagen können in der x-Richtung hintereinander angeordnet sein. Das Portal ist dann über den mehreren Werkstückauflagen verfahrbar.

Das Portal weist einen Querträger auf. Der Querträger übergreift die Werkstückauflage(n) quer zur x-Richtung in der y-Richtung. Das Portal kann einen, vorzugsweise zwei Ständer aufweisen, an welchen der Querträger gehalten ist. Der Querträger kann in feststehender Höhe an den Ständern gehalten sein. Alternativ kann der Querträger in einer Höhenrichtung (im Folgenden der z-Richtung des vorzugsweise kartesischen Koordinatensystems gleichgesetzt) an den Ständern auf- und abbewegbar sein.

Die x-Richtung bezeichnet die Bewegungsrichtung des gesamten Portals. Der Querträger erstreckt sich in der y-Richtung, typischerweise senkrecht zur x-Richtung. Die wenigstens eine Werkstückauflage erstreckt sich vorzugsweise parallel zur x-y-Ebene, insbesondere in einer horizontalen Ebene. Die z-Richtung verläuft in der Regel senkrecht zur x-y-Ebene.

Die Werkzeugmaschine weist wenigstens eine Aufnahmeeinrichtung für ein Werkzeug auf. Das Werkzeug kann ein Werkzeug zum Bearbeiten und/oder Prüfen eines auf der Werkstückauflage angeordneten Werkstücks sein. Vorzugsweise sind mehrere, insbesondere wenigstens zwei Aufnahmeeinrichtungen für jeweils ein Werkzeug vorgesehen.

Die wenigstens eine Aufnahmeeinrichtung ist entlang des Querträgers in der y-Richtung bewegbar. Wenn mehrere Aufnahmeeinrichtungen vorgesehen sind, können diese unabhängig voneinander oder gekoppelt in der y-Richtung bewegbar sein. Zusätzlich kann vorgesehen sein, dass die Aufnahmeeinrichtung(en) in der z-Richtung, insbesondere senkrecht zum Querträger, bewegbar sind.

Die Aufnahmeeinrichtung kann einen Gelenkarm umfassen, der an dem Querträger in der y-Richtung verfahrbar ist. Dadurch kann die Reichweite der Aufnahmeeinrichtung vergrößert werden. Zudem können zusätzliche Freiheitsgrade zur Ausrichtung der Werkzeuge eingerichtet werden.

Die Werkzeugmaschine weist ferner ein Magazin mit mehreren Speicherplätzen für Werkzeuge auf. Das Magazin ermöglicht die Bevorratung verschiedener Werkzeuge. Die Speicherplätze weisen typischerweise je eine Halteeinrichtung auf. Mit der Halteeinrichtung kann ein jeweiliges Werkzeug für die Dauer eines Nichtgebrauchs im Magazin fixiert werden.

Die Werkzeuge können Bearbeitungswerkzeuge (z. B. Zerspanungswerkzeuge und/oder Befestigungswerkzeuge) und/oder Prüfwerkzeuge (z. B. Messwerkzeuge) sein. Die Werkzeuge können auch als Aggregate bezeichnet werden.

Die Werkzeuge, insbesondere Zerspanungswerkzeuge, können unmittelbar an der Aufnahmeeinrichtung aufnehmbar sein. Entsprechend können die Werkzeuge, insbesondere Zerspanungswerkzeuge, an den Speicherplätzen unmittelbar an der jeweiligen Halteeinrichtung festlegbar sein.

Alternativ können die Werkzeuge, insbesondere Befestigungs- und/oder Prüfwerkzeuge, vermittels eines Halters an der Aufnahmeeinrichtung aufnehmbar sein. Der Halter dient mit anderen Worten zur Kopplung des jeweiligen Werkzeugs, insbesondere Befestigungsaggregats, mit der Aufnahmeeinrichtung. Entsprechend können die Werkzeuge, insbesondere Befestigungs- und/oder Prüfwerkzeuge, an den Speicherplätzen über den jeweiligen Halter an der jeweiligen Halteeinrichtung festlegbar sein.

Die Aufnahmeeinrichtungen können zur Aufnahme nur eines bestimmten Typs von Werkzeugen oder zur Aufnahme von verschiedenen Typen von Werkzeugen eingerichtet sein.

Ein Befestigungswerkzeug dient zum Befestigen mehrerer Werkstückteile aneinander. Befestigungswerkzeuge können aus der folgenden Gruppe ausgewählt sein: Nagelgerät, insbesondere Druckluft-Nagelgerät und/oder Impuls-Nagelgerät, Klammergerät, Schraubgerät, Klebe- oder Leimauftragsgerät.

Zerspanungswerkzeuge dienen zur spanabhebenden Bearbeitung der Werkstücke bzw. Werkstückteile. Zerspanungswerkzeuge können aus der folgenden Gruppe ausgewählt sein: Säge, Fräser, Bohrer.

Prüfwerkzeuge dienen zum Prüfen der Werkstücke, insbesondere im Hinblick auf die erfolgreiche Bearbeitung mit einem Befestigungs- oder Zerspanungswerkzeug. Prüfwerkzeuge können aus der folgenden Gruppe ausgewählt sein: Laserscanner, Foto- und/oder Videokamera, Ultraschallmessgerät, optischer Sensor, taktiler Sensor.

Die Halter für die Werkzeuge weisen passend zur Größe des gehaltenen Werkzeugs eine Höhe von wenigstens 0,4 m, bevorzugt wenigstens 0,5 m, weiter bevorzugt 0,6 m, auf. Derart große Werkzeuge sind für verschiedene Bearbeitungs- oder Prüfaufgaben erforderlich bzw. ermöglichen eine besonders rationelle Durchführung der jeweiligen Bearbeitung oder Prüfung.

Die Aufnahmeeinrichtungen sind am Querträger typischerweise seitlich (bezüglich dessen Erstreckungsrichtung) geführt.

An der Aufnahmeeinrichtung können die jeweiligen Werkzeuge angekoppelt werden. Sofern die Werkzeuge in einem Halter aufgenommen sind, weisen die Halter vorteilhaft eine einheitliche (unabhängig vom Typ des Werkzeugs, insbesondere unabhängig vom Typ des Befestigungsaggregats, jeweils gleichartige) Schnittstelle zur Kopplung mit der Aufnahmeeinrichtung auf. Insbesondere kann an den Haltern ein jeweils gleichartiger Koppelabschnitt ausgebildet sein.

Die Aufnahmeeinrichtung kann eine Fixiereinheit zur Verbindung mit dem Koppelabschnitt eines jeweiligen Werkzeugs bzw. Halters aufweisen. Die Fixiereinheit kann für eine kraft- und/oder formschlüssige Verbindung zu dem Koppelabschnitt eingerichtet sein.

Die gesamte Aufnahmeeinrichtung oder die Fixiereinheit der Aufnahmeeinrichtung kann relativ zum Querträger um eine oder mehrere Achsen schwenkbar sein. Befestigungsmittel, wie beispielsweise Nägel, Klammern, Schrauben oder Leim, können dann unter verschiedenen Winkeln ins Werkstück eingebracht oder aufs Werkstück aufgetragen werden. Entsprechend kann eine zerspanende Bearbeitung unter verschiedenen Winkeln des Zerspanungswerkzeugs relativ zum Werkstück durchgeführt werden. Ebenso kann zur Prüfung ein Prüfwerkzeug relativ zum Werkstück geneigt werden.

Erfindungsgemäß ist das Magazin an dem Portal angeordnet und gemeinsam mit dem Portal in der x-Richtung verfahrbar. Das Magazin ist somit an dem Portal befestigt. Wenn sich das Portal in der x-Richtung bewegt, bewegt sich auch das Magazin insgesamt in der x-Richtung. Unabhängig von der Bewegung des Portals in der x-Richtung, kann sich die Aufnahmeeinrichtung am Querträger in der y-Richtung und ggf. z-Richtung am Querträger bewegen. Es versteht sich, dass das Magazin bewegbare Komponenten aufweisen kann, beispielsweise um Werkzeuge oder Halter mit Werkzeugen mit der Aufnahmeeinrichtung auszutauschen oder um Werkzeuge bzw. Halter mit Werkzeugen an einem der Speicherplätze zu fixieren bzw. für den Wechselvorgang freizugeben.

Die Erfinder haben erkannt, dass ein mitfahrendes Magazin für Werkzeuge, insbesondere in Haltern aufgenommene Befestigungsaggregate, unabhängig von den jeweiligen Kundenanforderungen einheitlich gestaltet werden kann. Dies ermöglicht eine kostengünstigere Bereitstellung des Magazins für alle Kundengruppen. Zudem kann durch die entfallende Variantenvielfalt der Ressourcenverbrauch bei der Herstellung der Werkzeugmaschine verringert werden. Insbesondere brauchen beim Hersteller der Werkzeugmaschine nicht verschiedene Typen von Magazinen bereitgehalten zu werden.

Weiterhin beschleunigt das mitfahrende Magazin den Wechsel der Werkzeuge erheblich. Für einen Wechselvorgang genügt es, die Aufnahmeeinrichtung für das Werkzeug an einem Querträger des Portals zu dem Magazin bzw. einem jeweiligen Speicherplatz zu bewegen. Dies ist mit kurzen Wegen (die höchstens so groß sind wie der Querträger in der y-Richtung breit ist) möglich. Der Wechselvorgang ist in jeder Position des Portals in x-Richtung möglich. Zudem können die vergleichsweise leichten Aufnahmeeinrichtungen schneller in y-Richtung bewegt werden als das gesamte Portal in x-Richtung. Eventuelle Dynamiknachteile bei der Bewegung des Portals in der x-Richtung aufgrund des mitfahrenden Magazins werden durch die verringerten Wechselzeiten überkompensiert. Neben den initial verringerten Kosten führt dies zu weiteren Effizienzvorteilen beim Betrieb der Werkzeugmaschine, etwa durch kürzere Taktzeiten. Verringerte Zeiten für die Werkstückbearbeitung ermöglichen zudem einen größeren Durchsatz von Werkstücken bei einer jeweiligen Werkzeugmaschine, wodurch der Ressourceneinsatz im Hinblick auf die erforderlichen Betriebsmittel (Anzahl der Werkzeugmaschinen, Aufstellfläche etc.) zur Bearbeitung einer bestimmten Anzahl von Werkstücken in einer vorgegebenen Zeit verringert wird. Zudem werden der Energieverbrauch und Verschleiß beim Wechsel von Werkzeugen verringert, wenn sich nur die Aufnahmeeinrichtung am Querträger bewegen muss, nicht aber das ganze Portal. Weniger Bewegungen des Portals verringern auch das Sicherheitsrisiko für Bedienpersonal. Bei mehreren Werkzeugauflagen ist es ferner möglich händische Zusatzarbeiten auszuführen, während die Werkzeugmaschine an einer anderen Werkstückauflage die Werkzeuge wechselt.

Zudem kann durch ein mitfahrendes Magazin die Anzahl der am Portal erforderlichen Aufnahmeeinrichtungen verringert werden, da schnell zwischen verschiedenen Werkzeugen gewechselt werden kann. Der Nachteil, das Magazin in x-Richtung mitbewegen zu müssen, wird damit zumindest teilweise kompensiert. Zudem kann vermieden werden, dass sich die mehreren Aufnahmeeinrichtungen bei der Bewegung in y-Richtung behindern, was die Bearbeitungsgeschwindigkeit weiter erhöht, da unproduktive Ausweichbewegung reduziert werden können.

Weiterhin verringert das mitfahrende Magazin den Platzbedarf der Werkzeugmaschine, da es nicht außerhalb des Arbeitsbereichs angeordnet werden muss.

Es können zwei voneinander separate Magazine für unterschiedliche Arten von Werkzeugen an dem Portal angeordnet und gemeinsam mit dem Portal verfahrbar sein. Vorzugsweise ist ein erstes der Magazine ein Magazin für Befestigungs- und/oder Prüfwerkzeuge und/oder ein zweites der Magazine ist ein Magazin für Zerspanungswerkzeuge. Derart können insbesondere Werkzeuge mit unterschiedlichen Schnittstellen schnell ausgewechselt werden. Eine Art von Werkzeugen kann unmittelbar an den Aufnahmeeinrichtungen aufnehmbar sein; eine andere Art von Werkzeugen kann über jeweilige Halter an den Aufnahmeeinrichtungen aufnehmbar sein.

Die beiden Magazine können auf in der x-Richtung gegenüberliegenden Seiten des Portals angeordnet sein. Dies kann die Erreichbarkeit der Magazine für die jeweiligen Aufnahmeeinrichtungen verbessern, insbesondere wenn diese ebenfalls an gegenüberliegenden Seiten des Querträgers angeordnet sind.

An in der x-Richtung gegenüberliegenden Seiten des Querträgers kann je wenigstens eine Aufnahmeeinrichtung angeordnet sein. Derart wird vermieden, dass sich die Aufnahmeeinrichtungen bei Bewegungen in y-Richtung gegenseitig behindern. Vorzugsweise sind die Aufnahmeeinrichtungen auf den gegenüberliegenden Seiten zur Aufnahme unterschiedlicher Typen von Werkzeugen eingerichtet.

Der Querträger kann auf wenigstens einem Ständer, typischerweise zwei Ständern, abgestützt sein. Der bzw. die Ständer können ein Fahrwerk zum Bewegen auf sich in der x-Richtung erstreckenden Schienen der Werkzeugmaschine aufweisen.

Das Magazin kann an dem Ständer oder einem der Ständer angeordnet sein. Das Magazin ist dann insbesondere neben der Werkstückauflage angeordnet, sodass es bei der Bearbeitung oder Prüfung von Werkstücken nicht stört. Magazine für Werkzeuge können auch an beiden Ständern vorgesehen sein. Es können Magazine für Werkzeuge an beiden in x-Richtung vor bzw. hinter dem Ständer liegenden Seiten eines (jeweiligen) Ständers vorgesehen sein.

Das Magazin kann an dem Querträger des Portals, insbesondere an einer Unterseite des Querträgers, angeordnet sein. Die Werkzeugmaschine kann dann in der y-Richtung besonders schmal sein. Soweit erforderlich kann der Querträger in z-Richtung höher angeordnet werden, um zwischen der Werkstückauflage und dem Querträger Platz für das Magazin zu schaffen.

Es ist auch denkbar, dass wenigstens ein erstes Magazin an einem Ständer und ein zweites Magazin unter dem Querträger angeordnet ist.

Die wenigstens eine Aufnahmeeinrichtung kann in der z-Richtung senkrecht zur Werkstückauflage relativ zum Querträger bewegbar sein. Alternativ oder zusätzlich könnte der Querträger in der z-Richtung bewegbar sein. Derart können die Werkzeuge an ein jeweiliges Werkstück herangeführt werden. Zudem kann eine in z-Richtung relativ zum Querträger bewegbare Aufnahmeeinrichtung den Austausch von Werkzeugen mit dem Magazin vereinfachen.

An dem Portal, insbesondere an dem Querträger, kann ein Roboterarm bzw. ein Knickarmroboter mit einem solchen Roboterarm angeordnet sein, der dazu eingerichtet ist, die Werkzeuge zwischen den Speicherplätzen im Magazin und der Aufnahmeeinrichtung und zwischen der Aufnahmeeinrichtung und den Speicherplätzen zu verlagern. Hierzu kann der Roboterarm einen Greifer aufweisen. Der Roboterarm kann eine Distanz zwischen der Aufnahmeeinrichtung und dem Magazin überbrücken. Dies ermöglicht es, das Magazin außerhalb der Reichweite der Aufnahmeeinrichtung anzuordnen. Bei Verwendung eines Roboterarms zum Wechseln der Werkzeuge kann ein maximaler Verfahrweg der Aufnahmeeinrichtung in y-Richtung und/oder z-Richtung kleiner sein als bei direktem Austausch der Werkzeuge zwischen der Aufnahmeeinrichtung und dem Magazin.

Die Speicherplätze für die Werkzeuge können jeweils zwischen wenigstens einer Ruheposition und einer Übergabeposition bewegbar sein. Für einen Austausch eines Werkzeugs zwischen dem Magazin und der Aufnahmeeinrichtung wird ein jeweiliger Speicherplatz in die Übergabeposition verbracht. Dies kann den konstruktiven Aufbau der Aufnahmeeinrichtung vereinfachen. Zugleich können bewegbare Speicherplätze die Aufnahmekapazität des Magazins erhöhen. Für Zeiten des Nichtgebrauchs können die Werkzeuge in die Ruheposition oder eine von mehreren Ruhepositionen verbracht werden. Derart können aktuell nicht benötigte Werkzeuge aus einem Arbeitsbereich entfernt werden.

Es kann vorgesehen sein, dass sich jeweils ein einziger Speicherplatz des Magazins in der Übergabeposition befindet. Die übrigen Speicherplätze des Magazins befinden sich in der Ruheposition oder einer von mehreren Ruhepositionen. Bewegungen der Aufnahmeeinrichtung beim Wechselvorgang können derart minimiert werden. Dies kann aus steuerungstechnischen Gründen vorteilhaft sein und beispielsweise die Ausrichtung der Aufnahmeeinrichtung zum jeweiligen Speicherplatz vereinfachen, etwa indem die Speicherplätze indexiert bewegbar sind. Bei einem Wechselvorgang wird zunächst ein erstes Werkzeug von der Aufnahmeeinrichtung an einen freien und in der Übergabeposition befindlichen Speicherplatz übergeben. Sodann wird ein Speicherplatz mit einem zweiten Werkzeug in die Übergabeposition verbracht und das zweite Werkzeug wird an die Aufnahmeeinrichtung übergeben.

Alternativ kann vorgesehen sein, dass die Speicherplätze in Paaren gekoppelt sind, sodass die Speicherplätze eines Paars nur gemeinsam in die Übergabeposition und die Ruheposition verbringbar sind. Es sind dann jeweils Paare von Übergabepositionen und Ruhepositionen eingerichtet. Dies verringert Bewegungen des Magazins während eines Wechselvorgangs. Stattdessen bewegt sich die Aufnahmeeinrichtung zwischen den beiden Übergabepositionen. Dies ist z. B. bei besonders schweren Werkzeugen vorteilhaft.

Um bewegbare Speicherplätze einzurichten, weist das Magazin bevorzugt eine drehbare Speicherplatzeinheit mit den mehreren Speicherplätzen auf. Die Speicherplätze können mit anderen Worten gemeinsam um eine Drehachse der Speicherplatzeinheit gedreht werden. Die Drehachse der Speicherplatzeinheit kann vertikal ausgerichtet sein. Die Speicherplätze können in der drehbaren Speicherplatzeinheit so angeordnet sein, dass beim Drehen eines Speicherplatzes aus der Übergabeposition in eine Ruheposition, automatisch ein anderer Speicherplatz aus einer Ruheposition in die Übergabeposition gedreht wird. Derart kann ein besonders kompaktes Magazin erhalten werden. Zugleich wird die Zufuhr der Werkzeuge in die Übergabeposition durch eine einfache Drehbewegung erreicht. Typischerweise ist ein Rotationsantrieb für die Speicherplatzeinheit mit den mehreren Speicherplätzen vorgesehen. Der Rotationsantrieb kann elektrisch, hydraulisch oder pneumatisch arbeiten.

Die drehbare Speicherplatzeinheit kann in z-Richtung feststehend am Portal angeordnet sein. Ein Lagerblock, an welchem die Speicherplatzeinheit drehbar gelagert ist, kann an einem Ständer des Portals fixiert sein. Dies vereinfacht den konstruktiven Aufbau, insbesondere wenn die Aufnahmeeinrichtung ohnehin in der z-Richtung bewegbar ist. Die Speicherplätze bewegen sich bei vertikal ausgerichteter Drehachse nur in einer horizontalen Ebene.

Alternativ kann bei bewegbaren Speicherplätzen vorgesehen sein, dass die Ruheposition seitlich neben der Werkstückauflage eingerichtet ist und die Übergabeposition oberhalb der Ruheposition eingerichtet ist. Die seitliche Ruheposition vermeidet Beeinträchtigungen des Arbeitsraums. Insbesondere kann ein Werkzeug in der Ruheposition zumindest teilweise unterhalb einer Auflagefläche der Werkstückauflage angeordnet sein. Die Ruheposition kann an einem Ständer des Portals eingerichtet sein. Die angehobene Übergabeposition vereinfacht die Übergabe eines Werkzeugs zwischen dem Magazin und der Aufnahmeeinrichtung, insbesondere kann die Ruheposition außerhalb der vertikalen Reichweite der Aufnahmeeinrichtung eingerichtet sein.

Die Begriffe oberhalb und unterhalb beziehen sich auf die vertikale Position ohne Aussagen über die horizontale Ausrichtung zweier Komponenten zueinander zu implizieren.

Vorzugsweise ist die Übergabeposition in der y-Richtung entlang des Querträgers gegenüber der Ruheposition zur Werkstückauflage hin versetzt. Die Bewegung der Speicherplätze erfolgt mithin nach schräg oben bzw. unten. Vertikal über der Ruheposition können dann weitere Komponenten des Portals angeordnet sein. Zudem kann die Erreichbarkeit der Übergabepositionen für die Aufnahmeeinrichtung verbessert werden, da die Aufnahmeeinrichtung in y-Richtung weniger weit nach außen fahren muss.

Zwischen der Ruheposition und der Übergabeposition kann eine rein translatorische Bewegung der Speicherplätze erfolgen. Eine vertikale Ausrichtung der Werkzeuge bleibt dann beim Bewegen der Speicherplätze erhalten. Die translatorische Bewegung der Speicherplätze kann beispielsweise mit einem Linearantrieb, insbesondere umfassend einen elektrischen, pneumatischen oder hydraulischen Linearaktuator, auf einfache Weise eingerichtet sein.

Bei der Ausführungsform mit abgesenkten Ruhepositionen und angehobenen Übergabepositionen sind die Speicherplätze typischerweise paarweise gekoppelt zwischen der jeweiligen abgesenkten Ruheposition und der jeweiligen angehobenen Übergabeposition bewegbar. Zwischen der Übergabe eines ersten Werkzeugs von der Aufnahmeeinrichtung an das Magazin und der Übernahme eines zweiten Werkzeugs aus dem Magazin durch die Aufnahmeeinrichtung brauchen die beiden Speicherplätze nicht bewegt zu werden.

Das Magazin kann insbesondere mehrere Speicherplätze aufweisen, die parallel nebeneinander angeordnet sind. Ferner weist das Magazin eine Schnittstelle zum Ständer auf. Die Schnittstelle zum Ständer bildet einen Verstellmechanismus, an dem das Magazin aus einer abgesenkten Stellung (entsprechend der Ruheposition der Speicherplätze) über ein Führungs- und Antriebssystem in eine angehobene Stellung (entsprechend der Übergabeposition der Speicherplätze) bewegt werden kann. Die Bewegung von der abgesenkten Stellung in die angehobene Stellung des Magazins kann durch z. B. einen elektrisch, pneumatisch oder hydraulischen betriebenen Linearaktuator oder durch ein ähnliches Antriebselement durchgeführt werden. Das Magazin kann hierbei leicht schräg gleichzeitig in z-Richtung und in y-Richtung angehoben werden. Beim schrägen Anheben können die Speicherplätze zur Mitte des Querträgers hinbewegt werden.

Weiter alternativ kann bei einer Ausführungsform mit bewegbaren Speicherplätzen vorgesehen sein, dass die Ruhepositionen der Speicherplätze sich unter dem Querträger befinden und die Übergabepositionen sich in der x-Richtung neben den Ruhepositionen befinden. Wenn sich die Speicherplätze in der jeweiligen Ruheposition befinden, können seitlich daneben Aufnahmeeinrichtungen am Querträger verfahren werden. In der Übergabeposition eines jeweiligen Speicherplatzes kann die Aufnahmeeinrichtung unmittelbar über den Speicherplatz verfahren werden. Vorzugsweise sind die Speicherplätze unabhängig voneinander zwischen ihrer jeweiligen Ruheposition und Übergabeposition bewegbar.

Bei einer ersten Weiterbildung dieser Ausführungsform sind die Speicherplätze zwischen ihrer Ruheposition und der Übergabeposition verschwenkbar, insbesondere um eine zur y-Richtung parallele Achse. In der Regel erfolgt zwischen der Ruheposition und der Übergabeposition eines jeweiligen Speicherplatzes ein Verschwenken um 90°.

Bei einer alternativen zweiten Weiterbildung sind die Speicherplätze jeweils zwischen der Ruheposition und der Übergabeposition in x-Richtung verschiebbar. Die Werkzeuge behalten dann ihre jeweilige Ausrichtung in vertikaler Richtung bei. Die Speicherplätze können zusätzlich in der y- und/oder z-Richtung verschiebbar sein.

Vorzugsweise ist für wenigstens einen Speicherplatz, insbesondere alle Speicherplätze des Magazins, beidseits des Querträgers eine erste und eine zweite Übergabeposition eingerichtet. Die Werkzeuge können dann auf beiden Seiten des Querträgers verwendet werden, wenn dort jeweils eine geeignete Aufnahmeeinrichtung vorgesehen ist.

Die Werkzeugmaschine kann mehrere Halter zur Aufnahme jeweils eines Werkzeugs, insbesondere eines Befestigungsaggregats aufweisen. Die Werkzeuge sind mittels der Halter an die Aufnahmeeinrichtung und vorzugsweise an eine Halteeinrichtung des Magazins koppelbar. Die Halter weisen vorteilhaft eine einheitliche (unabhängig vom Typ des Werkzeugs jeweils gleichartige) Schnittstelle zur Kopplung mit der Aufnahmeeinrichtung bzw. Halteeinrichtung auf. Insbesondere kann an den Haltern ein jeweils gleichartiger Koppelabschnitt ausgebildet sein.

Die Halter können unterseitig jeweils eine Kontaktanordnung zum Aufsetzen auf einem Werkstück aufweisen. Die Kontaktanordnung kann mit einer Gleitplatte und/oder Rollen gebildet sein. Über die Kontaktanordnung kann ein Werkstückteil des Werkstücks niedergehalten und gegen ein anderes Werkstückteil gedrückt werden. Zudem kann die Kontaktanordnung es ermöglichen, die Halter mit den Werkzeugen reibungsarm und ohne Beschädigungen auf den Werkstücken zu bewegen.

Die Werkzeugmaschine kann weiterhin mehrere Werkzeuge aufweisen. Die Werkzeuge können insbesondere Prüfwerkzeuge und/oder Bearbeitungswerkzeuge sein. Bearbeitungswerkzeuge sind vorzugsweise Befestigungswerkzeuge und/oder Zerspanungswerkzeuge.

Befestigungswerkzeuge können aus der folgenden Gruppe ausgewählt sein: Nagelgerät, insbesondere Druckluft-Nagelgerät und/oder Impuls-Nagelgerät, Klammergerät, Schraubgerät, Klebe- oder Leimauftragsgerät. Die Befestigungswerkzeuge sind vorzugsweise jeweils in einem der Halter aufgenommen.

Ein Vorrat von Befestigungsmitteln, insbesondere Nägeln, Klammern, Schrauben, Klebstoff oder Leim kann an dem jeweiligen Befestigungsgerät oder Halter bereitgestellt sein. Nägel, Klammern oder Schrauben können in Gurten oder Magazintrommeln vorgehalten sein. Klebstoff oder Leim können in entleerbaren Gebinden vorgehalten sein.

Zerspanungswerkzeuge können aus der folgenden Gruppe ausgewählt sein: Säge, Fräser, Bohrer.

Ein Werkzeug kann alternativ ein Markierwerkzeug sein.

Prüfwerkzeuge können aus der folgenden Gruppe ausgewählt sein: Laserscanner, Foto- und/oder Videokamera, Ultraschallmessgerät, optischer Sensor, taktiler Sensor.

Eine Aufnahmeeinrichtung für ein Zerspanungswerkzeug kann eine drehbar angetriebene Werkzeugspindel aufweisen.

Wenn zwei voneinander separate Magazine für unterschiedliche Arten von Werkzeugen an dem Portal angeordnet und gemeinsam mit dem Portal verfahrbar sind, kann ein erstes der Magazine ein Magazin für Befestigungs- und/oder Prüfwerkzeuge und/oder ein zweites der Magazine ist ein Magazin für Zerspanungswerkzeuge sein. In dem ersten Magazin können mehrere Unterschiedliche Befestigungs- und/oder Prüfwerkzeuge bevorratet sein. In dem zweiten Magazin können mehrere unterschiedliche Zerspanungswerkzeuge bevorratet sein.

Die Zerspanungswerkzeuge können ohne einen separaten Werkzeughalter im zweiten Magazin bevorratet bzw. an der Aufnahmeeinrichtung aufnehmbar sein. Eine Werkzeugschnittstelle kann in an sich bekannter Weise beispielsweise ein Hohlschaftkegel oder dergleichen sein.

### Erfindungsgemäßes Betriebsverfahren für eine Werkzeugmaschine

Die Erfindung betrifft ferner ein Verfahren zum Betreiben einer Werkzeugmaschine mit einem in einer x-Richtung über einer Werkstückauflage verfahrbaren Portal und mit wenigstens einem an dem Portal angeordneten Magazin mit mehreren Speicherplätzen für Werkzeuge, das gemeinsam mit dem Portal in der x-Richtung verfahren wird. Die Werkzeugmaschine kann eine der oben beschriebenen, erfindungsgemäßen Werkzeugmaschinen sein.

Das Verfahren umfasst die Schritte:
A) Bewegen einer Aufnahmeeinrichtung, insbesondere mit einem ersten Werkzeug, (in einer y-Richtung) entlang eines Querträgers des Portals der Werkzeugmaschine zu dem Magazin;
B) Übergeben des ersten Werkzeugs von der Aufnahmeeinrichtung an einen ersten der Speicherplätze des Magazins und/oder
C) Übergeben eines zweiten Werkzeugs von einem zweiten der Speicherplätze des Magazins an die Aufnahmeeinrichtung;
D) Bewegen der Aufnahmeeinrichtung, insbesondere mit dem zweiten Werkzeug, entlang des Querträgers.

Die Schritte A) bis D) werden grundsätzlich in der angegebenen Reihenfolge durchgeführt. Wenn kein Werkzeug an der Aufnahmeeinrichtung aufgenommen ist, entfällt Schritt B). Wenn die Aufnahmeeinrichtung für die nachfolgende Bearbeitung oder Prüfung des Werkstücks nicht benötigt wird, kann Schritt C) entfallen.

Derart wird ein Werkzeug gewechselt, ohne das gesamte Portal in der x-Richtung bewegen zu müssen. Prinzipiell können die Schritte A) bis D) ganz oder teilweise durchgeführt werden, während das Portal in der x-Richtung stillsteht oder während das Portal in der x-Richtung verfahren wird, etwa um ein Werkstück mittels eines an einer weiteren Aufnahmeeinrichtung aufgenommenen weiteren Werkzeugs zu bearbeiten oder zu prüfen.

Vor Schritt A) und nach bzw. während Schritt D) kann mittels des (in den Schritten B) bzw. C) aus- bzw. eingewechselten) Werkzeugs ein Werkstück bearbeitet bzw. geprüft werden. Die Erfindung betrifft insofern auch ein Fertigungsverfahren.

Vor Schritt B) kann der erste Speicherplatz von einer Ruheposition in eine Übergabeposition verbracht wird. Vor Schritt C) kann der zweite Speicherplatz von einer Ruheposition in eine Übergabeposition verbracht werden. Dies kann den Wechselvorgang beschleunigen und die Raumausnutzung verbessern.

Der erste Speicherplatz kann vor Schritt C) wieder in eine (dieselbe oder eine andere) Ruheposition verbracht werden. Die Aufnahmeeinrichtung braucht sich dann zwischen der Abgabe des ersten Werkzeugs und der Aufnahme des zweiten Werkzeugs nicht zu bewegen, wenn anschließend der zweite Speicherplatz in dieselbe Übergabeposition gebracht wird wie zuvor der erste Speicherplatz.

Alternativ können der erste und zweite Speicherplatz gemeinsam in ihre jeweilige Übergabeposition und ihre jeweilige Ruheposition verbracht werden. Dann werden Bewegungen des Magazins verringert. Die Aufnahmeeinrichtung überwindet zwischen den Schritten B) und C) die (typischerweise geringe) Distanz zwischen den beiden Übergabepositionen.

Die Schritte A), B) und/oder C) und D) können erneut durchgeführt werden, während sich das Portal über der Werkstückauflage in einer anderen Position befindet als bei einer vorherigen Durchführung der Schritte A), B) und/oder C) und D). Bewegungen des Portals, die nicht zur Bearbeitung oder Prüfung des Werkstücks beitragen, können dadurch vermieden werden. Die Schritte A), B) und/oder C) und D) werden somit insbesondere in derjenigen Position durchgeführt, in welcher sich das Portal gerade befindet, wenn das Erfordernis eines Werkzeugwechsels besteht. Sofern sich das Portal während des Werkzeugwechsels mit den Schritten A), B) und/oder C) und D) in der x-Richtung bewegt, werden die Schritte A) bis D) zumindest teilweise, insbesondere vollständig, bei einer anderen Position des Portals durchgeführt als bei dem vorigen Werkzeugwechsel.

Wenn auf in der x-Richtung gegenüberliegenden Seiten des Portals je eine Aufnahmeeinrichtung angeordnet und entlang des Querträgers bewegbar ist, können die Schritte A), B) und/oder C) und D) jeweils für beide Aufnahmeeinrichtungen durchgeführt werden. Vorzugsweise ist den Aufnahmeeinrichtungen auf den beiden gegenüberliegenden Seiten jeweils ein separates Magazin zugeordnet, das auf der jeweiligen Seite des Portals angeordnet ist und gemeinsam mit dem Portal in der x-Richtung verfahren wird. Derart können insbesondere unterschiedliche Arten von Werkzeugen in jeweils geeigneten Magazinen bevorratet und an jeweils geeignete Aufnahmeeinrichtungen übergeben werden. Die Schritte A), B) und/oder C) und D) können für die beiden Aufnahmeeinrichtungen durchgeführt werden, während sich das Portal an unterschiedlichen Positionen in der x-Richtung befindet. Sofern sich das Portal während der beiden Werkzeugwechsel in der x-Richtung bewegt, können die Schritte A) bis D) zumindest teilweise, insbesondere vollständig, bei einer anderen Position des Portals durchgeführt werden als bei dem Werkzeugwechsel für die andere Aufnahmeeinrichtung.

Weitere Merkmale und Vorteile der Erfindung ergeben sich aus der Beschreibung, den Ansprüchen und der Zeichnung. Erfindungsgemäß können die vorstehend genannten und die noch weiter ausgeführten Merkmale jeweils einzeln für sich oder zu mehreren in beliebigen, zweckmäßigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

### Detaillierte Beschreibung der Erfindung und Zeichnung

Die Erfindung ist in der Zeichnung dargestellt und wird anhand von Ausführungsbeispielen beschrieben.
- Fig. 1: zeigt eine erfindungsgemäße Werkzeugmaschine mit einem ersten drehbaren Magazin für Befestigungswerkzeuge und/oder Prüfwerkzeuge und einem zweiten drehbaren Magazin für Zerspanungswerkzeuge, die an einem Ständer eines fahrbaren Portals angeordnet sind, in einer schematischen Draufsicht;
- Fig. 2: zeigt die Werkzeugmaschine von Figur 1 in einer schematischen Perspektivansicht, wobei ein zusätzliches Magazin für Befestigungswerkzeuge und/oder Prüfwerkzeuge unter einem Querträger des Portals zu erkennen ist;
- Fig. 3: zeigt ein in einem Halter aufgenommenes Befestigungswerkzeug, hier ein Klammergerät, in einer schematischen Perspektivansicht;
- Fig. 4: zeigt einen vergrößerten Ausschnitt der Werkzeugmaschine von Figur 1, im Bereich des ersten drehbaren Magazins mit Haltern für Befestigungswerkzeuge;
- Fig. 5: zeigt einen Ausschnitt einer erfindungsgemäßen Werkzeugmaschine aufweisend ein Magazin mit unter einem Querträger schwenkbar angeordneten Haltern für Werkzeuge, wobei ein Halter für ein Werkzeug in eine Übergabeposition geschwenkt ist;
- Fig. 6: zeigt einen Ausschnitt der Werkzeugmaschine von Figur 5 mit einem an eine Aufnahmeeinrichtung angekoppeltem Halter mit einem Befestigungswerkzeug;
- Fig. 7: zeigt eine Prinzipskizze einer erfindungsgemäßen Werkzeugmaschine mit einem Magazin, dessen Speicherplätze unter einem Querträger eines Portals in Verfahrrichtung des Portals relativ zum Querträger verschieblich sind;
- Fig. 8: zeigt eine Prinzipskizze einer weiteren erfindungsgemäßen Werkzeugmaschine mit einem ersten Magazin, das an einem Ständer eines Portals nach schräg oben anhebbar ist, und mit einem zweiten Magazin, das an einem Ständer feststehend angeordnet ist, wobei ein Roboterarm zum Verbringen von Werkzeugen zwischen dem zweiten Magazin und einer Aufnahmeeinrichtung vorgesehen ist;
- Fig. 9: zeigt ein schematisches Ablaufdiagramm eines erfindungsgemäßen Betriebsverfahrens für eine erfindungsgemäße Werkzeugmaschine;
- Fig. 10: zeigt ein weiteres schematisches Ablaufdiagramm eines weiteren erfindungsgemäßen Betriebsverfahrens für eine erfindungsgemäße Werkzeugmaschine.

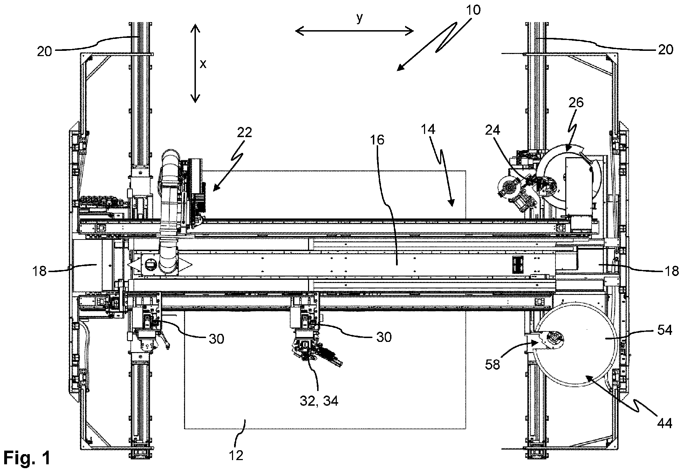

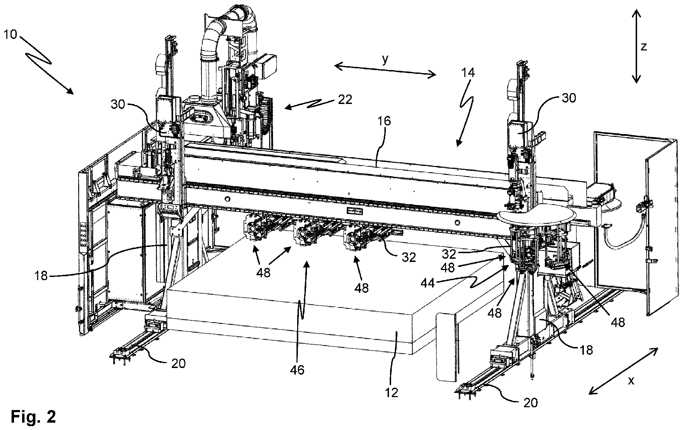

In den **Figuren 1** und **2** ist eine Werkzeugmaschine **10** dargestellt. Die Werkzeugmaschine 10 weist eine Werkstückauflage **12,** hier in Form eines Werkstücktisches, auf. Über der Werkstückauflage 12 ist ein Portal **14** entlang einer x-Richtung verfahrbar. Ein Querträger **16** des Portals 14 ist über zwei Ständer **18** auf Schienen **20** abgestützt. Die Ständer 18 können hierzu Fahrwerke aufweisen. Über nicht im Detail dargestellte Antriebsriemen, die insbesondere mittig innerhalb der Ständer 18 geführt sein können, kann das Portal 14 bewegt werden.

Bei der dargestellten Ausführungsform ist auf einer ersten Seite des Querträgers 16 eine Aufnahmeeinrichtung **22** für Werkzeuge, insbesondere Zerspanungswerkzeuge, angeordnet. Die Aufnahmeeinrichtung 22 ist in einer y-Richtung entlang des Querträgers 16 bewegbar. Ferner ist die Aufnahmeeinrichtung 22 in einer z-Richtung, senkrecht zur x- und y-Richtung, bewegbar. In einem Magazin **26** mit einer drehbaren Speicherplatzeinheit sind unterschiedliche Werkzeuge **24,** insbesondere Zerspanungswerkzeuge, bereitgestellt (in Figur 1 teils von einer Abdeckung des Magazins 26 verdeckt). Durch Drehen der Speicherplatzeinheit um eine vertikale Drehachse kann je einer der Speicherplätze in eine Übergabeposition gebracht werden. Die die Aufnahmeeinrichtung 22 kann in der y-Richtung über das Magazin 26 verfahren werden und dann ein Werkzeug an dessen in der Übergabeposition befindlichen Speicherplatz übergeben und nach Weiterdrehen der Speicherplatzeinheit ein anderes Werkzeug aufnehmen. Das Magazin 26 bewegt sich mit dem Portal 14 in der x-Richtung.

An dem Querträger 16 ist ferner wenigstens eine Aufnahmeeinrichtung **30** für einen Halter mit einem weiteren Werkzeug, insbesondere einem Befestigungswerkzeug oder Prüfwerkzeug in y-Richtung bewegbar geführt. Vorliegend sind zwei solcher Aufnahmeeinrichtungen 30 für je einen Halter **32** mit je einem weiteren Werkzeug **34,** insbesondere je einem Befestigungswerkzeug, vorgesehen. Die Aufnahmen 30 sind zudem in der z-Richtung relativ zum Querträger 16 bewegbar.

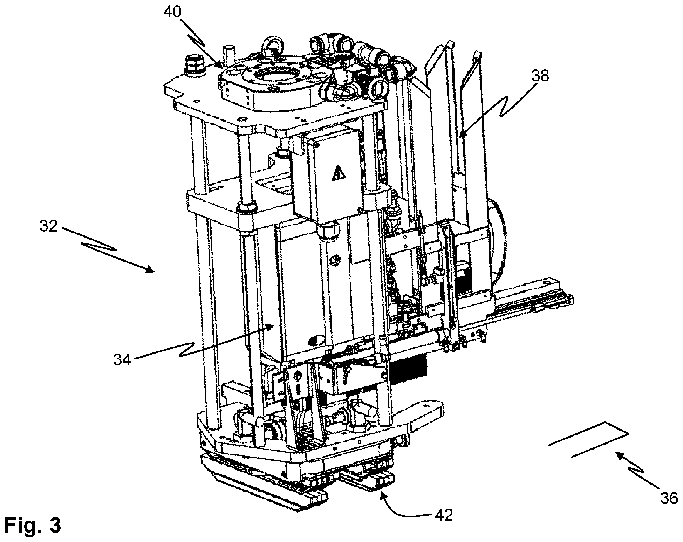

Ein Halter 32 mit einem Befestigungswerkzeug 34 ist in **Figur 3** dargestellt. Das Befestigungswerkzeug 34 ist hier beispielhaft ein Klammergerät, welches dazu dient, Befestigungsmittel **36,** hier Klammern, in ein Werkstück einzutreiben, um Werkstückteile dieses Werkstücks miteinander zu verbinden. Von dem Befestigungswerkzeug 34 in das Werkstück einzubringende Befestigungsmittel 36, im dargestellten Ausführungsbeispielen die Klammern, sind in einem Befestigungsmittelmagazin **38** bevorratet. Anstelle von Klammern könnten beispielsweise auch Nägel oder Schrauben als Befestigungsmittel vorgesehen sein (nicht im Einzelnen dargestellt). Das Befestigungswerkzeug wäre dann entsprechend ein Nagelgerät bzw. ein Schraubgerät. In diesen Fällen könnten die Befestigungsmittel in trommelförmigen oder streifenförmigen Befestigungsmittelmagazinen aufgenommen sein. Die Befestigungsmittel können an Gurten gehalten sein. Weiterhin könnte Leim oder Klebstoff als Befestigungsmittel von einem Leim- bzw. Klebstoffauftragsgerät auf die Werkstückteile aufgetragen werden.

Der Halter 32 ist an das jeweils aufzunehmende Befestigungswerkzeug 34 angepasst. Entsprechende Aufnahmemittel unterscheiden sich je nach Art des Befestigungswerkzeugs 34.

Zur Verbindung mit der Aufnahmeeinrichtung 30 ist an dem Halter 32 ein Koppelabschnitt **40** vorgesehen, der unabhängig von der Art des Befestigungswerkzeugs 34 jeweils gleichartig ausgebildet ist. Mit anderen Worten weisen alle Halter 32 eine einheitliche Schnittstelle zur Aufnahmeeinrichtung 30 auf. Es versteht sich, dass auch Leitungen zur Steuerung und/oder Energieversorgung des Befestigungswerkzeugs 34 mit der Aufnahmeeinrichtung 30 automatisch verbindbar sein können.

Unterseitig am Halter 32 kann ein Kontaktelement **42** zum Aufsetzen des Halters 32 auf einem jeweiligen Werkstück bzw. Werkstückteil vorgesehen sein. Vorliegend ist eine Gleitplatte am Halter 32 angebracht. Anstelle von Gleitplatten könnten beispielsweise auch Rollen als Kontaktelemente vorgesehen sein (nicht näher dargestellt). Das Kontaktelement 42 kann beim Verschieben des Halters 32 mit dem Befestigungswerkzeug 34 in Kontakt mit der Oberfläche des Werkstücks bleiben. Zudem kann das Kontaktelement 42 dazu dienen, zwei Werkstückteile gegeneinander zu drücken.

Mehrere Halter 32 mit je einem Befestigungswerkzeug 34 sind in einem oder mehreren Magazinen **44, 46** am Portal 14 bevorratet, vergleiche Figuren 1 und 2. In diesen Figuren sind die Befestigungswerkzeuge 34 der Übersichtlichkeit halber teils nicht dargestellt. Alle Halter 32 weisen jeweils, wie zuvor erläutert, einen gleichartigen Koppelabschnitt 40 zur Verbindung des jeweiligen Halters 32 und einer der Aufnahmeeinrichtungen 30 auf. Die Befestigungswerkzeuge 34 können vom selben Typ oder von unterschiedlicher Bauart sein.

Jedes Magazin 44, 46 weist zumindest zwei Speicherplätze **48** für je ein in einem Halter 32 angeordnetes Werkzeug 34 auf. Typischerweise sind in einem Magazin 44, 46 drei, vier oder mehr Speicherplätze 48 ausgebildet.

Die Magazine 44, 46 sind an dem Portal 14 angebracht, sodass sie sich beim Verfahren des Portals 14 über der Werkstückauflage 12 gemeinsam mit dem Portal 14 in der x-Richtung bewegen. Dadurch wird erreicht, dass zum Auswechseln von Befestigungswerkzeugen 34 eine Bewegung der jeweiligen Aufnahmeeinrichtung 30 in der y-Richtung und ggf. in der z-Richtung genügt. Diese Bewegungen erfolgen über vergleichsweise kurze Wegstrecken und können mit hoher Dynamik ausgeführt werden. Demgegenüber ist ein Verfahren des (schweren) Portals 14 über eine große Wegstrecke in x-Richtung nicht erforderlich; die Befestigungswerkzeuge 34 können unabhängig von der x-Position des Portals 14 gewechselt werden. Gleichwohl kann die Werkzeugmaschine 10 auch während eines Wechsels von Befestigungswerkzeugen 34 eine (vom Wechselvorgang unabhängige) Bewegung des Portals 14 in der x-Richtung ausführen, beispielsweise um mit den Werkzeugen 24 ein Werkstück zu bearbeiten.

Das Magazin 44 ist an einem der Ständer 18 befestigt. Das Magazin 42 ist in der z-Richtung unbeweglich am Ständer 18 angebracht. Die Koppelabschnitte 40 der Halter 32 im Magazin 42 können sich (in z-Richtung) auf Höhe des Querträgers 16 befinden.

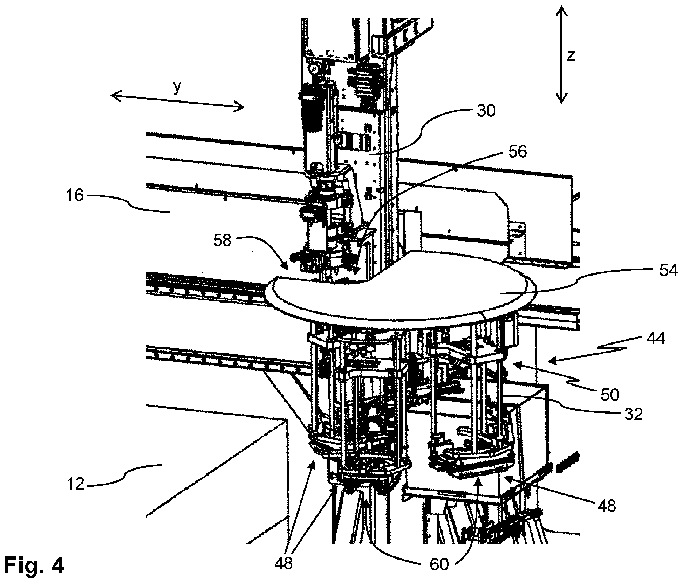

Das Magazin 44 weist eine drehbare Speicherplatzeinheit **50** auf, vergleiche auch **Figur 4****.** Die Drehbarkeit der Speicherplatzeinheit 50 ist vorliegend um eine vertikale (zur z-Richtung parallele) Drehachse eingerichtet. Die Halter 32 mit den Werkzeugen sind in vertikaler Ausrichtung, entsprechend ihrer Gebrauchsstellung an der Aufnahmeeinrichtung 30, in die Speicherplatzeinheit 50 eingesetzt. Die Speicherplatzeinheit 50 umfasst an jedem Speicherplatz 48 eine Halteeinrichtung für einen Halter 32. Die Halteeinrichtungen und Speicherplätze 48 sind hier von einem Deckel **54** überdeckt.

Um einen Zugriff auf einen der im Magazin 42 bevorrateten Halter 32 zu ermöglichen, weist der Deckel 54 im Bereich einer Übergabeposition **56** eine Aussparung 58 auf. Die Aussparung **58** kann in ihrer Größe veränderlich sein, um wahlweise ein Einfahren der Aufnahmeeinrichtung 30 in die Ausnehmung 58 zu ermöglichen oder die Halter 32 und Werkzeuge 34 abzudecken.

Um einen Halter 32 mit einem Befestigungswerkzeug 34 zwischen der Aufnahmeeinrichtung 30 und dem Magazin 42 auszutauschen, wird einer der Speicherplätze 48 durch Drehen der gesamten Speicherplatzeinheit 50 in die Übergabeposition 56 gebracht. Die anderen Speicherplätze 48 bzw. Halter 32 und Befestigungswerkzeuge 34 befinden sich in einer Ruheposition **60.** Vorliegend sind unter dem Deckel 54 mehrere Ruhepositionen eingerichtet

Die Aufnahmeeinrichtung 30 kann dann zunächst ihren zuletzt verwendeten Halter 32 an diesen Speicherplatz übergeben, wobei die Kopplung zum Koppelabschnitt 40 des Halters 32 gelöst wird. Hierbei kann die Aufnahmeeinrichtung 30 eine Hubbewegung in der z-Richtung durchführen.

Sodann wird ein anderes Werkzeug 34 durch Drehen der Speicherplatzeinheit 50 in die Übergabeposition gebracht. Die Aufnahmeeinrichtung 30 koppelt dann an dessen Halter 32, genauer dessen Koppelabschnitt 40, an. Hierbei kann die Aufnahmeeinrichtung 30 eine Hubbewegung in der z-Richtung durchführen. Das eingewechselte und über den Halter 32 mit der Aufnahmeeinrichtung 30 verbundene Befestigungswerkzeug 34 kann dann zur Befestigung von Werkstückteilen aneinander verwendet werden.

Das weitere Magazin 46 weist unter dem Querträger 16 angeordnete Speicherplätze 48 auf, vergleiche auch Figur 2, wo das Magazin 48 drei Speicherplätze 48 aufweist.

Wenigstens eines der Werkzeuge 34 in den Magazinen 44 und/oder 46 könnte auch ein Prüfwerkzeug sein.

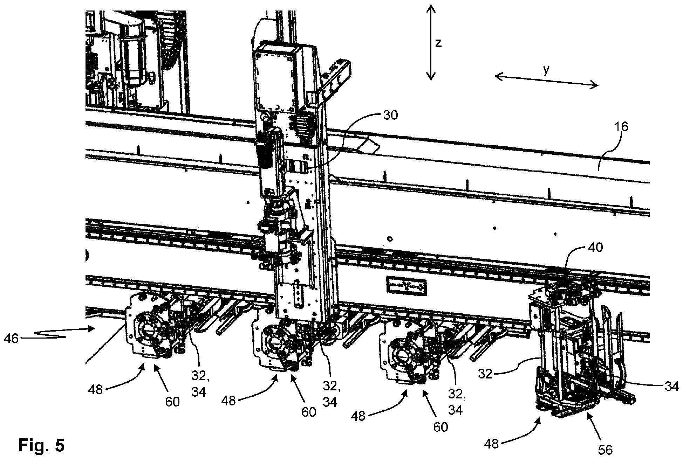

In **Figur 5** ist ein ähnliches Magazin 46 mit vier Speicherplätzen 48 unter dem Querträger 16 dargestellt. In einer Ruheposition 60 liegen die Halter 32 mit den Werkzeugen 34 in horizontaler Ausrichtung unter dem Querträger 16, welcher diese überdeckt. In Figur 5 ist dies für die drei linken Speicherplätze 48 bzw. Halter 32 dargestellt. Ein vierter, in Figur 5 rechter, Speicherplatz 48 mit einem Halter 32 und einem Werkzeug 34 ist in eine Übergabeposition 56 gedreht. Hierzu sind die Speicherplätze 48 des Magazins 46 um eine zur y-Richtung parallele Achse schwenkbar am Querträger 16 gelagert. Die Übergabeposition 56 eines jeweiligen Speicherplatzes 48 liegt somit in der x-Richtung neben seiner Ruheposition 60. Für jeden der Speicherplätze 48 ist eine individuelle Übergabeposition 56 und Ruheposition 60 eingerichtet.

In Figur 5 ist kein Befestigungswerkzeug 43 an der Aufnahmeeinrichtung 30 angebracht. Zur Aufnahme des in die Übergabeposition 56 gedrehten Werkzeugs 34 fährt die Aufnahmeeinrichtung 30 in y-Richtung zu diesem Werkzeug 34 und koppelt an den Koppelabschnitt 40 des Halters 32 an. Hierbei kann die Aufnahmeeinrichtung 30 eine Hubbewegung in der z-Richtung durchführen.

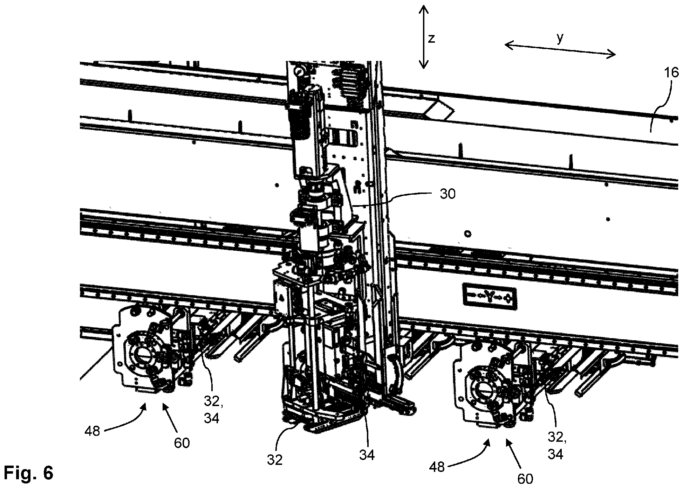

In **Figur 6** ist das Werkzeug 34 über seinen Halter 32 mit der Aufnahmeeinrichtung 30 verbunden. Die Aufnahmeeinrichtung 30 kann vor den in einer jeweiligen Ruheposition 60 befindlichen weiteren Haltern 32 mit Werkzeugen 34 in der y-Richtung am Querträger 16 verfahren und Bewegungen in der z-Richtung durchführen, um das eingewechselte Werkzeug 34 an Bestimmungsorte am Werkstück zu verbringen.

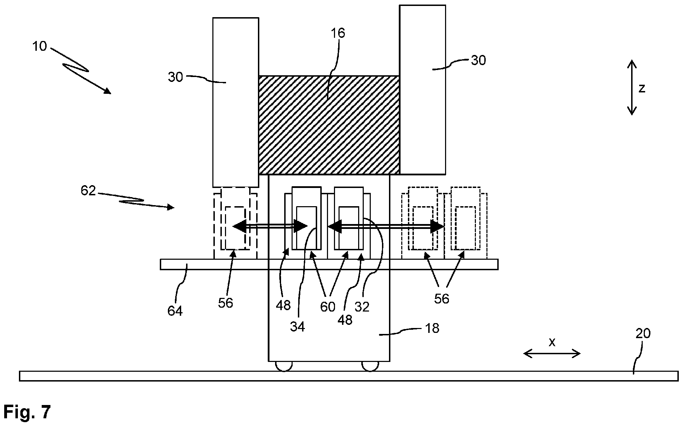

**Figur 7** zeigt eine Werkzeugmaschine 10, bei welcher ein Magazin **62** unter einem Querträger 16 eines Portals 14 angeordnet ist. Bei dieser Ausführungsform sind Halter 32 mit Werkzeugen 34 (hier beispielhaft einem Befestigungswerkzeug und einem Prüfwerkzeug) stehend an Speicherplätzen 48 aufgenommen. Die Speicherplätze 48 sind in horizontaler Richtung verschieblich geführt, beispielsweise über eine Führungsschiene **64** an einem Ständer 18. Wenn sich die Speicherplätze 48 in ihren Ruhepositionen 60 befinden, überdeckt der Querträger 16 die Speicherplätze 48 mit den Haltern 32 und Werkzeugen 34.

Zum Wechseln der Werkzeuge 32 werden die Speicherplätze 48 einzeln oder paarweise in der x-Richtung unter dem Querträger 16 hervorgeschoben. Eine Aufnahmeeinrichtung 30 kann dann ein Werkzeug 34 mit einem Halter 32 an einen freien Speicherplatz 48 übergeben bzw. ein Werkzeug 34 mit einem Halter 32 von einem Speicherplatz 48 aufnehmen.

Bei der Ausführungsform von Figur 7 sind beidseits am Querträger Aufnahmeeinrichtungen 30 vorgesehen. Ein Verschieben eines einzelnen Speicherplatzes 48 ist mit gestrichelten Linien auf der linken Seite von Figur 7 dargestellt; ein gekoppeltes Verschieben zweier Speicherplätze 48 ist mit gepunkteten Linien auf der rechten Seite von Figur 7 dargestellt. Hier können die Speicherplätze 48 wahlweise in die eine oder andere Richtung verschoben werden. In der y-Richtung (senkrecht zur Zeichenebene) können vor oder hinter den dargestellten Speicherplätzen 48 des Magazins 62 weitere Speicherplätze vorgesehen sein.

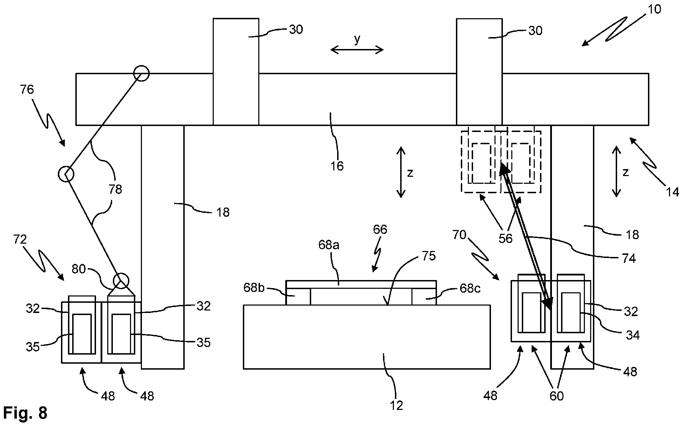

Eine weitere Werkzeugmaschine 10 ist in **Figur 8** dargestellt. Hier ist ein Werkstück **66** mit mehreren Werkstückteilen **68a, 68b, 68c** auf einer Werkstückauflage 12 angeordnet. Das plattenförmige Werkstückteil 68a, hier eine Pressspan- oder Gipskartonplatte, soll an den Werkstückteilen 68b, 68c, hier Kanthölzern, befestigt werden.

Bei der Werkzeugmaschine 10 von Figur 8 sind zwei weitere Bauformen von Magazinen **70, 72** für Werkzeuge 34, **35** in Haltern 32 dargestellt.

In der Praxis ist wenigstens ein mitfahrendes Magazin an einer Werkzeugmaschine 10 vorgesehen. Vorteilhaft können mehrere gleichartige Magazine 70 bzw. 72 oder mehrere Magazine 70, 72 unterschiedlicher Arten vorhanden sein. Dies gilt auch für die zuvor bereits beschriebenen Bauformen von Magazinen 26, 44, 46, 62. Die verschiedenen Magazine 26, 44, 46, 62, 70 bzw. 72 einer Werkzeugmaschine 10 können für unterschiedliche Arten von Werkzeugen 24, 34 angepasst sein.

Das Magazin 70 ist an einem Ständer 18 angeordnet, hier beispielhaft an dem rechten Ständer 18. Zumindest zwei Speicherplätze 48 des Magazins 70 sind mechanisch miteinander gekoppelt und gemeinsam geradlinig mittels eines durch einen Doppelpfeil angedeuteten Linearantriebs **74** verschiebbar. Ruhepositionen 60 sind seitlich neben der Werkstückauflage 12 eingerichtet, wobei die Halter 32 zumindest teilweise in z-Richtung unterhalb einer Auflagefläche **75** der Werkstückauflage 12 angeordnet sind. Die Übergabepositionen 56 sind oberhalb der Ruhepositionen 60 und der Werkstückauflage 12 eingerichtet. Hier sind die Übergabepositionen 56 zudem gegenüber den Ruhepositionen 60 in y-Richtung zur Werkstückauflage 12 hin nach innen versetzt, wobei sich zumindest einer der Halter 32 in y-Richtung zumindest teilweise über der Werkstückauflage 12 befinden kann. Die Bewegung zwischen den Ruhepositionen 60 und den Übergabepositionen 56 erfolgt nach schräg oben, hier in der y-z-Ebene. Dies kann dazu beitragen, den Bauraum optimal auszunutzen und Kollisionen mit weiteren Komponenten der Werkzeugmaschine 10 zu vermeiden. Zudem wird die Erreichbarkeit der Speicherplätze 48 für die Aufnahmeeinrichtung 30 verbessert.

Das Magazin 72 ist feststehend an einem Ständer 18 angeordnet, hier beispielhaft an dem linken Ständer 18. Um die Halter 32 mit den Werkzeugen 35, hier beispielhaft Prüfwerkzeugen, zwischen den Speicherplätzen 48 im Magazin 72 und einer Aufnahmeeinrichtung 30 auszutauschen, ist ein Roboterarm **76** am Portal 14 angeordnet, beispielsweise am Querträger 16 befestigt. Der Roboterarm 76 kann als ein Knickarm mit mehreren gegeneinander schwenkbaren Segmenten **78** ausgebildet sein und einen Greifer **80** zum Ergreifen der Halter 12 aufweisen.

Nach einem weiteren Ausführungsbeispiel der Werkzeugmaschine 10 befindet sich jeweils ein einziger Speicherplatz 48 des Magazins 44 in der Übergabeposition 56.

Nach einem weiteren Ausführungsbeispiel der Werkzeugmaschine 10 sind die Speicherplätze 48 jeweils zwischen der Ruheposition 60 und der Übergabeposition 56 in der x-Richtung verschiebbar, vorzugsweise wobei für wenigstens einen Speicherplatz 48, insbesondere alle Speicherplätze 48 des Magazins 62, beidseits des Querträgers 16 eine erste und eine zweite Übergabeposition 56 eingerichtet ist.

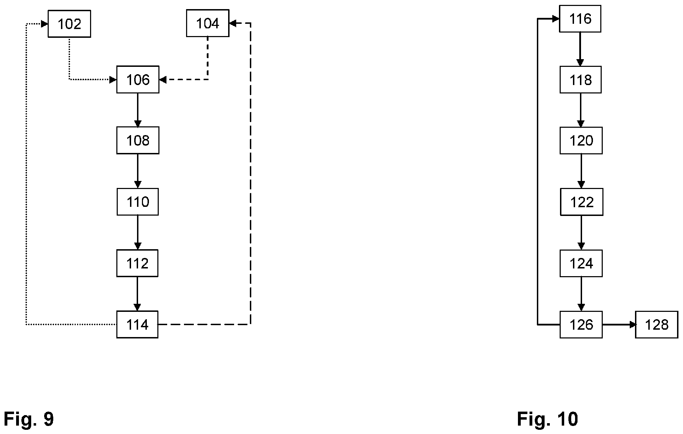

**Figur 9** zeigt ein schematisches Ablaufdiagramm für den Betrieb, insbesondere die Fertigung mittels einer Werkzeugmaschine, beispielsweise einer der oben beschriebenen Werkzeugmaschinen 10. Nachfolgend wird das Verfahren beispielhaft anhand der in Figur 1 dargestellten Werkzeugmaschine 10 beschrieben.

In Schritten **102** und **104** bewegen sich die Aufnahmeeinrichtungen 22 und 30 mit ersten Werkzeugen 24, 34 in y-Richtung am Querträger 16, während sich das Portal 14 insgesamt in x-Richtung bewegen kann. Dabei kann mittels der Werkzeuge 24, 34 eine Bearbeitung und ggf. Prüfung (wenn Prüfwerkzeuge 35 eingesetzt werden, vergleiche insofern auch Figur 8) eines Werkstücks 66 erfolgen.

In einem Schritt **106** kann eine der Aufnahmeeinrichtungen 30 an dem Querträger 16 zu dem Magazin 44 bewegt werden, um das Werkzeug 34 zu wechseln. Hierfür wird in einem Schritt **108** ein freier Speicherplatz 48 durch Drehen der Speicherplatzeinheit 50 in eine Übergabeposition 56 gebracht. Das an der Aufnahmeeinrichtung 30 gehaltene erste Werkzeug 34 wird in einem Schritt **110** an den freien Speicherplatz 48 gebracht und von der Aufnahmeeinrichtung 30 gelöst. Das erste Werkzeug 34 kann von einer Halteeinrichtung im Magazin 44 fixiert werden.

In einem Schritt **112** wird ein zweites Werkzeug 34 durch Drehen der Speicherplatzeinheit 50 an die Übergabeposition 56 verbracht. Dieses zweite Werkzeug 34 wird ggf. von einer Halteeinrichtung freigegeben und an der Aufnahmeeinrichtung 30 fixiert, vergleiche Schritt **114.** Während der Durchführung der Schritte 106 bis 108 mit der Aufnahmeeinrichtung 30 kann die Werkzeugmaschine mit dem Werkzeug 24 an der Aufnahmeeinrichtung 22 weiterarbeiten, wobei sich insbesondere das Portal 14 in der x-Richtung bewegen kann.

Sodann kann sich die Aufnahmeeinrichtung 30 mit dem zweiten Werkzeug 34 an dem Querträger 16 in der y-Richtung bewegen, während sich zudem das Portal 14 in der x-Richtung bewegen kann. Das Werkzeug 34 kann dabei am Werkstück 66 zur Bearbeitung eingesetzt werden, etwa um Werkstückteile 68a-68c aneinander zu befestigen. Dies entspricht einer erneuten Durchführung des Schritts 104. Es versteht sich, dass dabei auch Bewegungen der Aufnahmeeinrichtung 30 und/oder des Querträgers 16 in z-Richtung durchgeführt werden können.

Für einen erneuten Wechsel des zweiten Werkzeugs 34 können die Schritte 106 bis 114 erneut durchgeführt werden.

Die Schritte 106 bis 114 können zudem in entsprechender Weise zum Wechseln des Werkzeugs 24 an der Aufnahmeeinrichtung 22 durchgeführt werden. In diesem Fall wird im Schritt 106 die Aufnahmeeinrichtungen 22 an dem Querträger 16 zu dem Magazin 26 bewegt. Im Schritt 108 wird ein freier Speicherplatz durch Drehen der Speicherplatzeinheit des Magazins 26 in eine Übergabeposition gebracht. Das an der Aufnahmeeinrichtung 22 gehaltene erste Werkzeug 24 wird im Schritt 110 an den freien Speicherplatz gebracht und von der Aufnahmeeinrichtung 22 gelöst. Das erste Werkzeug 24 kann von einer Halteeinrichtung im Magazin 26 fixiert werden.

Im Schritt 112 wird ein zweites Werkzeug 24 durch Drehen der Speicherplatzeinheit an die Übergabeposition verbracht. Dieses zweite Werkzeug 24 wird ggf. von einer Halteeinrichtung freigegeben und an der Aufnahmeeinrichtung 22 fixiert, vergleiche Schritt 114. Während der Durchführung der Schritte 106 bis 108 mit der Aufnahmeeinrichtung 22 kann die Werkzeugmaschine mit dem Werkzeug 34 an der Aufnahmeeinrichtung 30 weiterarbeiten, wobei sich insbesondere das Portal 14 in der x-Richtung bewegen kann.

Sodann kann die Aufnahmeeinrichtung 22 mit dem zweiten Werkzeug 24 in einem erneuten Schritt 102 zur Bearbeitung des Werkstücks 66 eingesetzt werden. Hierzu kann sich die Aufnahmeeinrichtung 22 an dem Querträger 16 in der y-Richtung bewegen, während sich zudem das Portal 14 in der x-Richtung bewegen kann; es können auch Bewegungen in z-Richtung erfolgen. Das Werkzeug 24 kann dabei am Werkstück 66 zur insbesondere zerspanenden Bearbeitung eingesetzt werden, etwa um Ausschnitte zu fräsen oder Löcher zu bohren. Für einen erneuten Wechsel des zweiten Werkzeugs 24 können die Schritte 106 bis 114 erneut durchgeführt werden. Dies ist in Figur 9 durch einen punktierten Pfeil angedeutet.

Die zuvor beschriebenen Wechselvorgänge der Werkzeuge 24, 34, 35 an den beiden Aufnahmeeinrichtungen 22, 30 können nacheinander oder auch zeitgleich durchgeführt werden.

Eine Verfahrensvariante für das Magazin 70 der in Figur 8 gezeigten Werkzeugmaschine 10 ist in **Figur 10** skizziert.

In einem Schritt **116** bewegt sich eine Aufnahmeeinrichtungen 30 mit einem ersten Werkzeug 34 in y-Richtung am Querträger 16, während sich das Portal 14 insgesamt in x-Richtung bewegen kann. Dabei kann mittels des Werkzeugs 34 eine Bearbeitung eines Werkstücks 66 erfolgen.

Für einen Wechsel des Werkzeugs 34 wird in einem Schritt **118** das Magazin 70 nach schräg oben angehoben, um seine beiden Speicherplätze 48 gemeinsam aus einer jeweiligen Ruheposition 60 in eine jeweilige Übergabeposition 56 zu verbringen. Sodann wird in einem Schritt **120** die Aufnahmeeinrichtung 30 entlang des Querträgers 16 zu einem ersten der Speicherplätze 48 des Magazins 70 bewegt. Ein erstes Werkzeug 34 wird in einem Schritt **122** von der Aufnahmeeinrichtung 30 an den ersten Speicherplatz 48 übergeben. Daraufhin wird die Aufnahmeeinrichtung 30 in einem Schritt **124** entlang des Querträgers zu dem zweiten Speicherplatz 48 verfahren, ohne dass das Magazin 70 weitere Bewegungen relativ zum Portal 16 durchführt. In einem Schritt **126** wird ein an dem zweiten Speicherplatz 48 vorgehaltenes zweites Werkzeug 34 von der Aufnahmeeinrichtung 30 aufgenommen. Das zweite Werkzeug kann nun in einem erneuten Schritt 116 verwendet werden, wobei sich die Aufnahmeeinrichtung 30 in y-Richtung am Querträger 16 und das Portal 14 in x-Richtung bewegen kann. Es versteht sich, dass dabei auch Bewegungen der Aufnahmeeinrichtung 30 und/oder des Querträgers 16 in z-Richtung durchgeführt werden können. Das Magazin 70 wird in einem Schritt **128** nach schräg unten abgesenkt, sodass die beiden Speicherplätze gemeinsam in ihre jeweilige Ruheposition überführt werden. Für einen wiederholten Wechsel des Werkzeugs 34 können die Schritte 118 bis 128 mehrfach durchgeführt werden.

Zusammenfassend betrifft die Erfindung eine Werkzeugmaschine, insbesondere zur Holzbearbeitung. Ein Portal ist über einer Werkstückauflage verfahrbar. Gemeinsam mit dem Portal bewegt sich wenigstens ein Magazin für Werkzeuge. Vorteilhaft sind mehrere mitbewegte Magazine für unterschiedliche Arten von Werkzeugen vorgesehen. Die Werkzeuge können je nach ihrem Typ in Haltern aufgenommen sein. Die Halter weisen vorzugsweise jeweils einen gleichartigen Koppelabschnitt auf. An einem Querträger des Portals ist wenigstens eine Aufnahmeeinrichtung vorgesehen und quer zur Verfahrrichtung des Portals bewegbar. Vorzugsweise ist beidseits wenigstens eine Aufnahmeeinrichtung bewegbar am Querträger angeordnet. Je ein (ggf. in einem Halter aufgenommenes) Werkzeug kann an eine Aufnahmeeinrichtung angekoppelt werden, um auf der Werkstückauflage angeordnete Werkstücke zu bearbeiten und/oder zu prüfen. Speicherplätze des Magazins bzw. der Magazine können relativ zum Portal bewegbar sein. Dadurch kann die Übergabe der Werkzeuge zwischen dem (jeweiligen) Magazin und der Aufnahmeeinrichtung erleichtert und das Magazin besonders platzsparend angeordnet werden. Gleichwohl bewegt sich das Magazin bzw. bewegen sich die Magazine insgesamt mit dem Portal mit, sodass für einen Wechselvorgang lediglich die Aufnahmeeinrichtung und ggf. das Magazin bewegt werden müssen.

### Bezugszeichenliste

Werkzeugmaschine **10**
Werkstückauflage **12**
Portal **14**
Querträger **16**
Ständer **18**
Schienen **20**
Aufnahmeeinrichtung **22**
Werkzeuge **24**
Magazin **26**
Aufnahmeeinrichtung **30**
Halter **32**
Werkzeuge **34, 35**
Befestigungsmittel **36**
Befestigungsmittelmagazin **38**
Koppelabschnitt **40**
Kontaktelement **42**
Magazin **44,** 46; 62; **70, 72**
Speicherplätze **48**
Speicherplatzeinheit **50**
Deckel **54**
Übergabeposition **56**
Aussparung **58**
Ruheposition **60**
Führungsschiene **64**
Werkstück **66**
Werkstückteile **68a, 68b, 68c**
Linearantrieb **74**
Auflagefläche **75**
Roboterarm **76**
Segmenten **78**
Greifer **80**
Bewegen **102** einer Aufnahmeeinrichtung mit einem Werkzeug entlang eines Querträgers und Verwenden des an der Aufnahmeeinrichtung aufgenommenen Werkzeugs
Bewegen **104** einer weiteren Aufnahmeeinrichtung mit einem weiteren Werkzeug entlang des Querträgers und Verwenden des weiteren an der weiteren Aufnahmeeinrichtung aufgenommenen Werkzeugs
Bewegen **106** zumindest einer der beiden Aufnahmeeinrichtungen am Querträger zu einem Magazin
Verbringen **108** eines freien Speicherplatzes in eine Übergabeposition
Übergeben **110** eines ersten Werkzeugs von der zumindest einen der beiden Aufnahmeeinrichtungen an das Magazin
Verbringen **112** eines Speicherplatzes mit einem zweiten Werkzeug in eine Übergabeposition
Übergeben **114** des zweiten Werkzeugs vom Magazin an die zumindest eine der beiden Aufnahmeeinrichtungen
Bewegen und Verwenden **116** eines an einer Aufnahmeeinrichtung aufgenommenen Werkzeugs
Verbringen **118** zweier gekoppelter Speicherplätze eines Magazins in eine jeweilige Übergabeposition
Bewegen **120** der Aufnahmeeinrichtung am Querträger zu einem ersten der Speicherplätze
Übergeben **122** eines Werkzeugs von der Aufnahmeeinrichtung an den ersten Speicherplatz
Bewegen **124** der Aufnahmeeinrichtung am Querträger zu einem zweiten der Speicherplätze
Übergeben **126** eines Werkzeugs von dem zweiten Speicherplatz an die Aufnahmeeinrichtung
Verbringen **128** der gekoppelten Speicherplätze in eine jeweilige Ruheposition

## Patentansprüche

1. Werkzeugmaschine (10) aufweisend
- wenigstens eine Werkstückauflage (12);
- ein über der Werkstückauflage (12) in einer x-Richtung verfahrbares Portal (14) mit einem Querträger (16);
- wenigstens eine entlang des Querträgers (16) in einer y-Richtung und bevorzugt in einer z-Richtung bewegbare Aufnahmeeinrichtung (22, 30) für ein Werkzeug (24, 34, 35) zum Bearbeiten und/oder Prüfen eines auf der Werkstückauflage (12) angeordneten Werkstücks (66); und
- wenigstens ein Magazin (26, 44, 46; 62; 70, 72) mit mehreren Speicherplätzen (48) für Werkzeuge (24, 34, 35);
**dadurch gekennzeichnet,**
**dass** das wenigstens eine Magazin (26, 44, 46; 62; 70, 72) an dem Portal (14) angeordnet und gemeinsam mit dem Portal (14) verfahrbar ist.

2. Werkzeugmaschine (10) nach Anspruch 1, wobei zwei voneinander separate Magazine (26, 44, 46; 62; 70, 72) für unterschiedliche Arten von Werkzeugen (24, 34, 35) an dem Portal (14) angeordnet und gemeinsam mit dem Portal (14) verfahrbar sind,
vorzugsweise wobei ein erstes der Magazine (44, 46; 62; 70, 72) ein Magazin für Befestigungs- und/oder Prüfwerkzeuge (34, 35) ist und/oder wobei ein zweites der Magazine (26) ein Magazin für Zerspanungswerkzeuge (24) ist, insbesondere wobei die beiden Magazine (26, 44) auf in der x-Richtung gegenüberliegenden Seiten des Portals (14) angeordnet sind.

3. Werkzeugmaschine (10) nach einem der vorhergehenden Ansprüche, wobei an in der x-Richtung gegenüberliegenden Seiten des Querträgers (16) je wenigstens eine Aufnahmeeinrichtung (22, 30) angeordnet ist, wobei vorzugsweise die Aufnahmeeinrichtungen (22, 30) auf den gegenüberliegenden Seiten zur Aufnahme unterschiedlicher Typen von Werkzeugen (24, 34, 35) eingerichtet sind.

4. Werkzeugmaschine (10) nach einem der vorhergehenden Ansprüche, wobei der Querträger (16) über wenigstens einen Ständer (18) insbesondere auf einer Schiene (20) abgestützt ist, und wobei das Magazin (26, 44; 62; 70, 72) an dem Ständer (18) angeordnet ist.

5. Werkzeugmaschine (10) nach einem der vorhergehenden Ansprüche, wobei das Magazin (46; 62) an dem Querträger (16), insbesondere an einer Unterseite des Querträgers (16), angeordnet ist.

6. Werkzeugmaschine (10) nach einem der vorhergehenden Ansprüche, wobei an dem Portal (14) ein Roboterarm (76) angeordnet ist, der dazu eingerichtet ist, die Werkzeuge (35) zwischen den Speicherplätzen (48) und der Aufnahmeeinrichtung (30) und zwischen der Aufnahmeeinrichtung (30) und den Speicherplätzen (48) zu verlagern.

7. Werkzeugmaschine (10) nach einem der vorhergehenden Ansprüche, wobei die Speicherplätze (48) jeweils zwischen einer Ruheposition (60) und einer Übergabeposition (56) bewegbar angeordnet sind, insbesondere wobei die Speicherplätze (48) in Paaren gekoppelt sind und die Speicherplätze eines Paars nur gemeinsam in die Übergabeposition (56) und die Ruheposition (60) verbringbar sind, insbesondere wobei die Ruheposition (60) seitlich neben der Werkstückauflage (12) eingerichtet ist und die Übergabeposition (56) oberhalb der Ruheposition (60) eingerichtet ist, und wobei vorzugsweise die Übergabeposition (56) in der y-Richtung entlang des Querträgers (16) gegenüber der Ruheposition (60) zur Werkstückauflage (12) hin versetzt ist.

8. Werkzeugmaschine (10) nach einem der vorigen Ansprüche, wobei das Magazin (26, 44) eine drehbare Speicherplatzeinheit (50) mit mehreren Speicherplätzen (48) aufweist, wobei vorzugsweise die Speicherplatzeinheit (50) um eine vertikale Drehachse drehbar angeordnet ist, insbesondere wobei die Speicherplatzeinheit (50) in z-Richtung feststehend am Portal (14) angeordnet ist.

9. Werkzeugmaschine (10) nach Anspruch 7, wobei die Ruhepositionen (60) der Speicherplätze (48) sich unter dem Querträger (16) befinden und die Übergabepositionen (56) sich in der x-Richtung neben den Ruhepositionen (60) befinden, insbesondere wobei die Speicherplätze (48) jeweils zwischen der Ruheposition (60) und der Übergabeposition (56) verschwenkbar angeordnet sind, insbesondere um eine zur y-Richtung parallele Achse.

10. Werkzeugmaschine (10) nach einem der vorhergehenden Ansprüche, weiterhin aufweisend mehrere Halter (32) zur Aufnahme jeweils eines Werkzeugs (34, 35), insbesondere eines Befestigungswerkzeugs (34), wobei die Werkzeuge (34, 35) mittels der Halter (32) an die Aufnahmeeinrichtung (30) und vorzugsweise an eine Halteeinrichtung des Magazins (44, 46; 62; 70, 72) koppelbar sind.

11. Werkzeugmaschine (10) nach einem der vorhergehenden Ansprüche, weiterhin aufweisend mehrere Werkzeuge (24, 34, 35), insbesondere Prüfwerkzeuge (35) und/oder Bearbeitungswerkzeuge (24, 34), vorzugsweise Befestigungswerkzeuge (34) und/oder Zerspanungswerkzeuge (24).

12. Verfahren zum Betreiben einer Werkzeugmaschine (10) mit einem in einer x-Richtung über einer Werkstückauflage (12) verfahrbaren Portal (14) und mit wenigstens einem an dem Portal (14) angeordneten Magazin (22, 44; 46; 62; 70, 72) mit mehreren Speicherplätzen (48) für Werkzeuge (24, 34, 35), das gemeinsam mit dem Portal (16) in der x-Richtung verfahren wird, insbesondere einer Werkzeugmaschine (10) nach einem der vorhergehenden Ansprüche,
mit den Schritten
A) Bewegen (106; 120) einer Aufnahmeeinrichtung (22, 30), insbesondere mit einem ersten Werkzeug (24, 34, 35), entlang eines Querträgers (16) des Portals (14) der Werkzeugmaschine (10) zu dem Magazin (22, 44; 46; 62; 70, 72);
B) Übergeben (110; 122) des ersten Werkzeugs (24, 34, 35) von der Aufnahmeeinrichtung (22, 30) an einen ersten der Speicherplätze (48) des Magazins (22, 44; 46; 62; 70, 72) und/oder
C) Übergeben (114; 126) eines zweiten Werkzeugs (24, 34, 35) von einem zweiten der Speicherplätze (48) des Magazins (22, 44; 46; 62; 70, 72) an die Aufnahmeeinrichtung (22, 30);
D) Bewegen (102; 116) der Aufnahmeeinrichtung (22, 30) mit dem zweiten Werkzeug (24, 34, 35) entlang des Querträgers (16).

13. Verfahren nach Anspruch 12, wobei vor Schritt B) der erste Speicherplatz (48) von einer Ruheposition (60) in eine Übergabeposition (59) verbracht wird, und/oder wobei vor Schritt C) der zweite Speicherplatz (48) von einer Ruheposition (60) in eine Übergabeposition (56) verbracht wird, insbesondere wobei der erste Speicherplatz (48) vor Schritt C) wieder in eine Ruheposition (60) verbracht wird, wobei bevorzugt der erste und zweite Speicherplatz (48) gemeinsam in ihre jeweilige Übergabeposition (56) und ihre jeweilige Ruheposition (60) verbracht werden.

14. Verfahren nach einem der Ansprüche 12 bis 13, wobei die Schritte A), B) und/oder C) und D) erneut durchgeführt werden, während sich das Portal (14) über der Werkstückauflage (12) in einer anderen Position befindet als bei einer vorherigen Durchführung der Schritte A), B) und/oder C) und D).

15. Verfahren nach einem der Ansprüche 12 bis 14, wobei auf in der x-Richtung gegenüberliegenden Seiten des Portals (14) je eine Aufnahmeeinrichtung (22, 30) angeordnet und entlang des Querträgers (16) bewegbar ist, und wobei die Schritte A), B) und/oder C) und D) jeweils für beide Aufnahmeeinrichtungen (22, 30) durchgeführt werden, insbesondere wobei den Aufnahmeeinrichtungen (22, 30) auf den beiden gegenüberliegenden Seiten jeweils ein separates Magazin (26, 44) zugeordnet ist, das auf der jeweiligen Seite des Portals (14) angeordnet ist und gemeinsam mit dem Portal (14) in der x-Richtung verfahren wird.
